Europäisches Patentamt

European Patent Office

Office européen des brevets

(11) Veröffentlichungsnummer : **0 196 428
B1**

# EUROPÄISCHE PATENTSCHRIFT

(45) Veröffentlichungstag der Patentschrift :
15.03.89

(51) Int. Cl.⁴ : **G 01 N 21/35, G 01 J 1/42**

(21) Anmeldenummer : **86101843.0**

(22) Anmeldetag : **13.02.86**

(54) **Photometer.**

(30) Priorität : 04.03.85 DE 3507572

(43) Veröffentlichungstag der Anmeldung :
08.10.86 Patentblatt 86/41

(45) Bekanntmachung des Hinweises auf die Patenterteilung : 15.03.89 Patentblatt 89/11

(84) Benannte Vertragsstaaten :
DE FR GB IT NL

(56) Entgegenhaltungen :
EP--A-- 0 076 571
EP--A-- 0 168 611
DE--A-- 2 646 580
DE--B-- 1 296 839
MESSEN + PRÜFEN, Band 19, nr. 5, Mai 1983, Seiten 264-267, Bad Wörishofen; V. NESTLER et al.: "DEFOR-ein neues Gerät für die Betriebsanalysentechnik"

(73) Patentinhaber : **Hartmann & Braun Aktiengesellschaft**
**Gräfstrasse 97**
**D-6000 Frankfurt am Main 90 (DE)**

(72) Erfinder : **Fabinski, Walter**
**An der Landwehr 70**
**D-6239 Kriftel (DE)**

**Beschreibung**

Die Erfindung betrifft ein Fotometer gemäß dem Oberbegriff des Anspruchs 1.

Es gibt verschiedene Varianten des Fotometers zur mengenmäßigen Bestimmung eines Gasanteiles. Sie arbeiten im Bereich der infraroten Strahlen dispersiv oder auch nicht dispersiv. Ein einwandfreier Betrieb ist gewährleistet, wenn fortlaufend neben der Meßgröße eine Referenzgröße anfällt und beide Größen in Relation zueinander gebracht werden, wie dies beispielsweise bei dem Infrarot-Gasanalysator Uras 2 T der Fall ist, der in dem Listenblatt 20-1.12 der Hartmann & Braun AG vom Mai 1983 beschrieben ist. Die von einem Strahler ausgehenden Infrarotstrahlen werden durch ein Blendenrad moduliert, durchlaufen eine zweigeteilte Küvette und treffen dann auf die Kammern eines zweigeteilten Empfängers. Bei einem solchen Gerät könnte auch eine Modulation durch intermittierenden Betrieb der Strahlungsquelle durchgeführt werden.

Durch die Erfindung wird ein Fotometer mit den Merkmalen des Oberbegriffes des Anspruches 1 geschaffen, bei dem nicht ein Küvettenpaar bzw. eine zweigeteilte Küvette zur Bildung eines Meßstrahles und eines Referenzstrahles angeordnet ist. Die Erfindung besteht darin, daß in den Strahlengang vor der Küvette ein Eingangsempfänger aus Polyvinylidenfluorid angeordnet ist, der für die Infrarotstrahlen teildurchlässig ist.

Eine Weiterbildung des Fotometers nach der Erfindung besteht darin, daß auch der Ausgangsempfänger aus Polyvinylidenfluorid besteht.

Der Aufbau des Eingangsempfängers und des Ausgangsempfängers hat den Vorteil, daß sie so groß dimensioniert werden können, daß sie die gesamte Apertur der Küvette überdecken.

Ein Fotometer, bei dem die modulierten Infrarotstrahlen direkt auf den Eingangsempfänger treffen, arbeitet zufriedenstellend. Wenn jedoch die auftreffenden Strahlen dem Eingangsempfänger soviel Energie zuführen, daß er sich aufheizt, wird vor dem Eingangsempfänger ein Interferenzfilter angeordnet, das das Spektrum der Infrarotstrahlen auf eine bestimmte Bandbreite beschränkt. Dieses Interferenzfilter könnte auch Selektivierungsaufgaben übernehmen.

Der Eingangsempfänger liefert das Referenzsignal, der Ausgangsempfänger liefert das Meßsignal. Das Verhältnis zwischen Referenzsignal und Meßsignal läßt sich generell durch Vergrößerung der Absorptionskapazität des Ein- oder Ausgangsempfängers ändern. Als einfaches Mittel bietet sich das Aufbringen schwarzer Farbe auf die Empfänger an.

Ausführungsbeispiele des erfindungsgemäß ausgebildeten Fotometers werden anhand der Zeichnung näher erläutert.

Figur 1 zeigt ein einfaches Fotometer nach der Erfindung ;

Figur 2 gibt die mit Hilfe des Fotometers gemäß Figur 1 gewonnenen Signale wieder ;

Figur 3 zeigt ein erweitertes Fotometer nach der Erfindung ;

Figur 4 gibt die mit Hilfe des Fotometers gemäß Figur 3 gewonnenen Signale wieder.

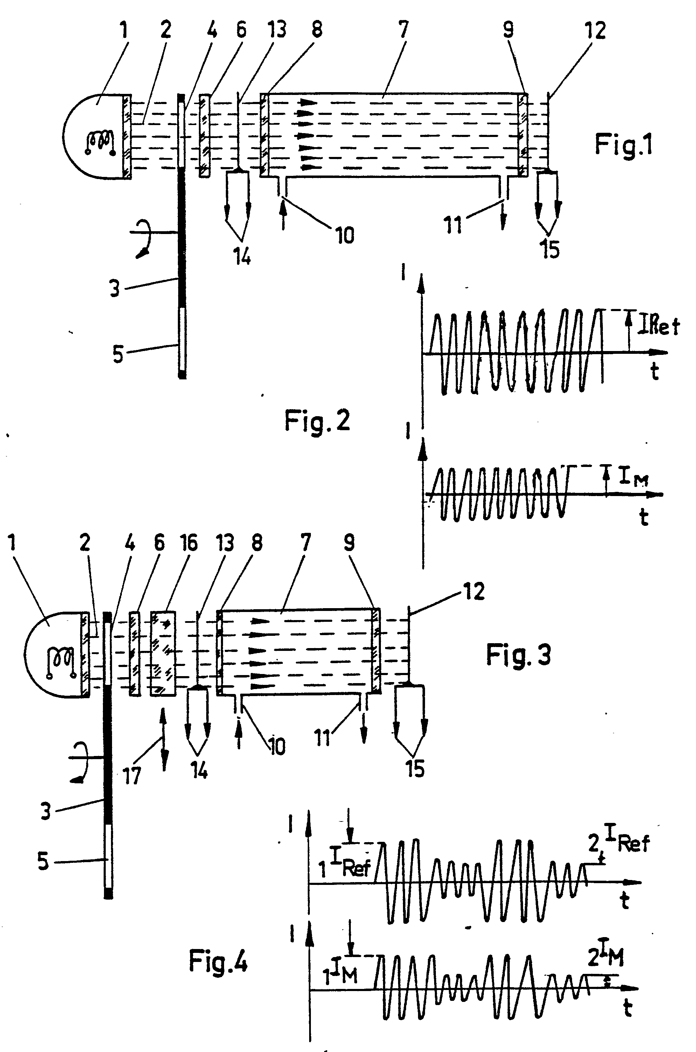

In dem Fotometer gemäß Figur 1 werden die von dem Strahler 1 ausgehenden Infrarotstrahlen 2 durch das Blendenrad 3 moduliert ; das mit den zwei Öffnungen 4 und 5 ausgestattet ist. Anstelle der Modulation durch das Blendenrad könnte auch eine Modulation durch intermittierenden Betrieb des Strahlers 1 erfolgen. Die modulierten Strahlen durchdringen das Interferenzfilter 6 und durchlaufen die Küvette 7, die mit den für Infrarotstrahlen durchlässigen Fenstern 8 und 9 versehen ist. Die Küvette 7 ist ungeteilt ; sie wird von dem Gasgemisch durchströmt, das den zu analysierenden Gasanteil enthält. Hierzu sind die Gasstutzen 10 und 11 vorgesehen. Die die Küvette 7 verlassenden Strahlen werden von dem Ausgangsempfänger 12 aufgenommen. Erfindungsgemäß ist in den Strahlengang 2 vor der Küvette 7 ein zweiter Empfänger, der Eingangsempfänger 13, aus Polyvinylidenfluorid (PVDF) angeordnet, der für die Lichtstrahlen im infraroten Bereich teildurchlässig ist.

Auf den Eingangsempfänger 13 fällt die gesamte das Interferenzfilter 6 durchdringende Strahlung, die zum Teil an die Kontakte 14 als Referenzsignal weitergeleitet wird ; der andere Teil wird in die Küvette 7 weitergegeben und trifft auf den Ausgangsempfänger 12, der das Meßsignal entstehen läßt.

Zweckmäßigerweise wird der Ausgangsempfänger 12 ebenfalls aus PVDF gefertigt, an dessen Kontakten 15 das Meßsignal als Folge des pyroelektrischen Effektes abgenommen werden kann.

Das Interferenzfilter 6 läßt nur einen Teil der Infrarotstrahlen 2 in Richtung auf den Eingangsempfänger 13 durch. Die Gesamtheit der Infrarotstrahlen würde u.U. zu einer nachteiligen Aufheizung des Eingangsempfängers führen. Das Interferenzfilter 6 könnte auch Selektivierungsaufgaben übernehmen. Die Absorptionsfähigkeit der PVDF-Empfänger 12 und 13 läßt sich durch Schwärzen der Empfänger 12 und 13 beeinflussen. Durch Aufbringen einer schwarzen Farbe läßt sich somit auch generell das Verhältnis von Referenzsignal und Meßsignal festlegen.

Figur 2 läßt die Signale, die infolge des pyroelektrischen Effektes an den PVDF-Empfängern entstehen, erkennen. Die Diagramme in Figur 2 sind im gleichen Maßstab über der Zeitachse gezeichnet. Im oberen Teil der Figur 2 ist das Referenzsignal $I_{Ref} = f(t)$ gezeichnet, das am Eingangsempfänger 13 entsteht ; im unteren Teil ist das Meßsignal $I_M = f(t)$ gezeichnet, das am Ausgangsempfänger 12 entsteht. Das Meßsignal $I_M$ ist entsprechend der Absorption in der Küvette 7 kleiner als das Signal $I_{Ref}$. Beide Signale werden mathematisch miteinander verknüpft. Es ergibt sich beispielsweise für das endgültige Signal $A_1$ die Beziehung

$$A_1 = \frac{I_{Ref} - I_M}{I_{Ref}}$$

In Figur 2 ist ein erfindungsgemäß ausgebildetes Fotometer dargestellt, das Ähnlichkeit mit dem Fotometer gemäß Figur 1 hat. Gleiche Bezugszeichen in beiden Figuren kennzeichnen gleiche Bauteile. Im Unterschied zu dem Fotometer nach Figur 1 ist das Fotometer nach Figur 3 zusätzlich mit einer Selektivierungsküvette 16 ausgerüstet, die mit der Gaskomponente gefüllt ist, die zu analysieren ist. Wenn die Konzentration von $CO_2$ zu bestimmen ist, wird die Selektivierungsküvette 16 in vorgegebener Konzentration mit $CO_2$ oder einem Gas ähnlicher Absorptionsbanden gefüllt. Diese Selektivierungsküvette wird in Richtung des Doppelpfeiles 17 hin und her bewegt, so daß sie in einem bestimmten Rhythmus in den Strahlengang der Infrarotstrahlen 2 eingeschaltet werden kann. Dieser Rhythmus ist durch die Signalabnahme an den Kontakten 14 und 15 der Empfänger 12 und 13 vorgegeben.

Durch den Betrieb des Fotometers mit der Selektivierungsküvette 16 entsteht am Ausgangsempfänger 12 die Signalfolge, wie sie im unteren Diagramm der Figur 4 zu erkennen ist. An dem Eingangsempfänger 13 entsteht die Signalfolge, wie sie im oberen Diagramm der Figur 4 zu erkennen ist. Das endgültige Signal $A_3$ ergibt sich z. B. durch folgende mathematische Verknüpfung :

$$A_3 = \frac{\dfrac{{}_1I_{Ref}}{{}_2I_{Ref}} - \dfrac{{}_1I_M}{{}_2I_M}}{\dfrac{{}_1I_{Ref}}{{}_2I_{Ref}}}$$

Bei der Signalverknüpfung gemäß dieser Formel werden alle die Stabilität bzw. die Genauigkeit des Fotometers beeinträchtigenden Einflüsse, wie z. B. Temperatur oder Verschmutzung der Küvette oder ungewollte Strahleremissionsänderungen, weitestgehend eliminiert.

## Patentansprüche

1. Fotometer, bei dem die von einem Strahler ausgehenden modulierten Infrarotstrahlen eine vom Meßgas durchströmte Küvette durchlaufen und von einem Ausgangsempfänger aufgenommen werden, dadurch gekennzeichnet, daß in dem Strahlengang (2) vor der Küvette (7) ein zweiter Empfänger als Eingangsempfänger (13) aus Polyvinylidenfluorid angeordnet ist, der für die Infrarotlichtstrahlen teildurchlässig ist.

2. Fotometer nach Anspruch 1, dadurch gekennzeichnet, daß der Ausgangsempfänger (12) aus Polyvinylidenfluorid besteht.

3. Fotometer nach Anspruch 2, dadurch gekennzeichnet, daß die Empfänger (12, 13) eine Ausdehnung haben wie der Querschnitt der Küvette (7).

4. Fotometer nach Anspruch 2 oder 3, dadurch gekennzeichnet, daß die Empfänger (12, 13) zur Erhöhung der Aufnahme der Strahlungsenergie geschwärzt sind.

5. Fotometer nach Anspruch 1 oder folgenden, dadurch gekennzeichnet, daß vor dem Eingangsempfänger (13) eine quer zum Strahlengang hin und her bewegbare Selektivierungsküvette (16) angeordnet ist, die in einem bestimmten durch die Signalabnahme am Ausgangsempfänger (12) vorgegebenen Rhythmus in den Strahlengang eingeschaltet werden kann.

## Claims

1. A photometer wherein the modulated infrared rays originating from a radiator pass through a cell through which the gas to be measured flows and are picked up by an output receiver, characterised in that a second receiver of polyvinylidene fluoride, which is partially reflective for the rays of infrared light, is disposed in the path of rays (2) in front of the cell (7) as an input receiver (13).

2. A photometer according to Claim 1, characterised in that the output receiver (12) consists of polyvinylidene fluoride.

3. A photometer according to Claim 2, characterised in that the receivers (12, 13) have the same extent as the cross-section of the cell (7).

4. A photometer according to Claim 2 or 3, characterised in that the receivers (12, 13) are blackened to increase the absorption of the radiation energy.

5. A photometer according to Claim 1 or any one of the following claims, characterised in that a selectivity cell (16), which is reciprocable transversely to the path of rays, is disposed in front of the input receiver (13) and can be interposed in the path of rays in a specific rhythm preset by the decrease in the signal at the output receiver (12).

**Revendications**

1. Photomètre dans lequel les rayons infrarouges modulés issus d'un émetteur traversent une cuve parcourue par un gaz à mesurer et sont recueillis par un capteur de sortie, caractérisé en ce que devant la cuve (7) est placé un second capteur sous forme d'un capteur en fluorure de polyvinylidène (13) qui est partiellement transparent aux rayonnements lumineux dans l'infrarouge.

2. Photomètre selon la revendication 1, caractérisé en ce que le capteur de sortie (12) est constitué de fluorure de polyvinylidène.

3. Photomètre selon la revendication 2, caractérisé en ce que les capteurs (12, 13) présentent un coefficient de dilatation identique à celui de la section transversale de la cuve (7).

4. Photomètre selon la revendication 2 ou 3, caractérisé en ce que les capteurs (12, 13) sont noircis pour augmenter l'absorption de l'énergie d'irradiation.

5. Photomètre selon la revendication 1 ou les suivantes, caractérisé en ce que, devant le capteur d'entrée (13), est placée une cuve de sélection (16) pouvant être animée perpendiculairement au trajet du rayonnement d'un mouvement alternatif vers le haut et vers le bas, qui peut être intercalée sur le parcours du rayonnement à un rythme prédéterminé par la réception du signal sur le capteur de sortie (12).

EP 0 196 428 B1

Fig.1

Fig. 2

Fig. 3

Fig.4